# EUROPEAN PATENT APPLICATION

(11) **EP 4 415 078 A1**
(43) Date of publication of application: **14.08.2024**
(21) Application number: 22945249.5
(22) Date of filing: 08.06.2022
(51) Int. Cl.: H01M 4/62, H01M 4/13, H01M 4/139

(54) **SECONDARY BATTERY AND PREPARATION METHOD THEREFOR, AND ELECTRIC DEVICE COMPRISING SECONDARY BATTERY**

(71) Applicant: Contemporary Amperex Technology Co., Limited, Ningde, Fujian 352100 (CN)
(72) Inventor: HU, Changyuan, Ningde, Fujian 352100 (CN); LU, Lei, Ningde, Fujian 352100 (CN); WANG, Yalong, Ningde, Fujian 352100 (CN); WANG, Zheng, Ningde, Fujian 352100 (CN); DENG, Kaiming, Ningde, Fujian 352100 (CN); YU, Linzhen, Ningde, Fujian 352100 (CN); LI, Shisong, Ningde, Fujian 352100 (CN); DAI, Shunhao, Ningde, Fujian 352100 (CN)
(74) Representative: Kraus & Lederer PartGmbB
(86) International application number: PCT/CN2022/097627
(87) International publication number: WO 2023/236104

(57) **Abstract**

This application discloses a secondary battery, where the secondary battery includes a first binder and a second binder, the first binder includes at least one of polyvinylidene fluoride, rubber, epoxy resin, polyurethane, and acrylate, and the second binder includes at least one of polytetrafluoroethylene, polyimide, polypropylene, polyethylene, ethylene vinyl acetate copolymer, and styrene-ethylene-butylene-styrene block copolymer.

## Description

### TECHNICAL FIELD

This application relates to the field of secondary battery technologies, and more specifically, to a secondary battery and a preparation method thereof, and an electric apparatus containing such secondary battery.

### BACKGROUND

With the application and promotion of traction batteries in the field of electric vehicles, the demand for secondary batteries continues to increase, and higher requirements are imposed on the cycling performance and kinetic performance of secondary batteries. How the energy density of the secondary batteries is increased while ensuring the cycling performance and rate performance is still one of the important issues in this field.

### SUMMARY

In view of the preceding issues, a first aspect of this application provides a secondary battery including a positive electrode plate. The positive electrode plate includes a positive electrode current collector and a positive electrode active material layer provided on at least one surface of the positive electrode current collector, where the positive electrode active material layer includes a positive electrode active material and a binder composite, the binder composite includes a first binder and a second binder, the first binder includes at least one of polyvinylidene fluoride, acrylonitrile-acrylate copolymer, rubber, epoxy resin, polyurethane, and acrylate, and the second binder includes at least one of polytetrafluoroethylene, polyimide, polypropylene, polyethylene, ethylene vinyl acetate copolymer, and styrene-ethylene-butylene-styrene block copolymer.

The binder composite included in the positive electrode active material layer of the secondary battery of this application can undergo fibrillation to form a physical fiber network, allowing for a reduction in the amount of binder and an increase in the active material percentage, thereby improving the energy density of the battery. In addition, relying on the physical network, the binder in the physical fiber state can bind the active material layer without coating the active material surface to impede active ion transport, thereby improving the cycling performance and rate performance of the battery. Furthermore, the binder composite of this application can also ensure good adhesion between the active materials and between the active materials and the current collector, thereby reducing the internal resistance of the battery and further improving the cycling performance of the battery.

In some embodiments, a mass ratio of the first binder to the second binder is 1 :(0.05 to 1.2). Optionally, the mass ratio of the first binder to the second binder is 1:(0.15 to 0.6).

Controlling the mass ratio of the first binder to the second binder within a proper range can further improve the cycling performance of the battery.

In some embodiments, the first binder has a weight-average molecular weight of 0.6×10⁶ to 2×10⁶. Optionally, the first binder has a weight-average molecular weight of 0.8×10⁶ to 1.4×10⁶. Controlling the weight-average molecular weight of the first binder within a proper range can further improve the cycling performance of the battery.

In some embodiments, the second binder has a weight-average molecular weight of 5×10⁶ to 50×10⁶. Optionally, the second binder has a weight-average molecular weight of 10×10⁶ to 30×10⁶. Controlling the weight-average molecular weight of the second binder within a proper range can enable the second binder to be mixed to better uniformity with the material, and in addition, the fibrillated second binder is long enough to form a network structure and has sufficient bondage and adhesion to the positive electrode active material, thereby enhancing the flexibility of the electrode plate.

In some embodiments, the second binder has a particle size Dᵥ50 of 0.2 µm to 2 µm. Optionally, the second binder has a particle size Dᵥ50 of 0.5 µm to 1.2 µm. Controlling the particle size Dᵥ50 of the second binder within a proper range can further improve the cycling performance of the battery.

In some embodiments, the second binder has a crystallinity greater than or equal to 80%. Optionally, the second binder has a crystallinity of 87% to 99%. A proper crystallinity can further improve the rate performance of the battery.

In some embodiments, the positive electrode active material includes olivine-structured lithium-containing phosphate, and the positive electrode active material has a median particle size by volume Dᵥ50 of 1.0 µm to 2.0 µm.

In some embodiments, the positive electrode active material includes lithium-containing transition metal oxide, and the positive electrode active material has a median particle size by volume Dᵥ50 of 3.0 µm to 10 µm.

A proper particle size range can further improve the charge/discharge performance of the battery at a high rate and effectively increase the capacity retention rate.

In some embodiments, the positive electrode active material includes olivine-structured lithium-containing phosphate, and the positive electrode active material has a specific surface area of 10 m²/g to 15 m²/g.

In some embodiments, the positive electrode active material includes lithium-containing transition metal oxide, and the positive electrode active material has a specific surface area of 0.4 m²/g to 2.0 m²/g.

Controlling the specific surface area of the positive electrode active material within a proper range can further improve the kinetic performance of the battery.

In some embodiments, the binder composite has a mass percentage of 1% to 5% in the positive electrode active material layer. Controlling the amount of binder within a proper range provides sufficient adhesion while avoiding a decrease in energy density of the battery as much as possible.

In some embodiments, the positive electrode active material layer has a thickness of 50 µm to 500 µm. Optionally, the positive electrode active material layer has a thickness of 100 µm to 300 µm. With the use of the binder composite of this application, a solid content of the positive electrode slurry can be greatly increased, and thus a thicker positive electrode active material layer can be prepared, and the energy density of the battery is greatly increased.

A third aspect of this application provides a preparation method of the secondary battery according to one or more of the preceding embodiments. The method includes preparing the positive electrode plate using the following steps:
providing the positive electrode current collector;
preparing a positive electrode slurry: including mixing the first binder, the second binder, and the positive electrode active material;
preparing the positive electrode slurry into a self-supporting positive electrode active material layer; and
compositing the positive electrode active material layer and the positive electrode current collector.

In some embodiments, the positive electrode slurry is prepared using the following steps:
mixing the first binder with a solvent to prepare a binder solution;
dry mixing the second binder and the positive electrode active material to prepare a mixture; and
shear mixing the binder solution with the mixture.

Dry mixing the positive electrode active material and materials such as the second binder allows these materials to be initially dispersed and to be mixed to better uniformity during shear mixing with a small amount of the binder solution, such that the positive electrode active material can fill and distribute in the network structure formed by fibrillation of the second binder, improving the electrical performance and kinetic performance of the battery.

In some embodiments, the dry-mixing preparation of the mixture is performed at a temperature of 5°C to 20°C.

In some embodiments, the dry-mixing preparation of the mixture is performed at a rotation speed of 500 rpm to 4000 rpm. Optionally, the dry-mixing preparation of the mixture is performed at a rotation speed of 1000 rpm to 2500 rpm.

In some embodiments, the dry-mixing preparation of the mixture is performed for 20 min to 120 min. Optionally, the dry-mixing preparation of the mixture is performed for 30 min to 90 min.

The dry mixing performed at a proper temperature, rotation speed, and time allows the materials to be mixed to uniformity without irreversible damage to the materials, and prevents the second binder from pre-fibrillation, which otherwise adversely affects the dispersion of the materials. Especially, the control of the dry mixing temperature is particularly important.

In some embodiments, the shear mixing is performed at a temperature of 25°C to 200°C. Optionally, the shear mixing is performed at a temperature of 45°C to 120°C.

In some embodiments, the shear mixing is performed at a rotation speed of 10 rpm to 200 rpm. Optionally, the shear mixing is performed at a rotation speed of 15 rpm to 120 rpm.

In some embodiments, the shear mixing is performed for 5 min to 60 min. Optionally, the shear mixing is performed for 20 min to 45 min.

In some embodiments, the solid content of the positive electrode slurry is higher than or equal to 75%, optionally in a range of 75% to 85%. The solid content of the positive electrode slurry of this application is higher than the solid content of the positive electrode slurry obtained through conventional wet coating, such that the floating of binder and conductive agent due to the drying in the conventional wet coating process can be effectively alleviated, and thus the cycling performance of the battery can be further improved.

In some embodiments, the positive electrode slurry is prepared into a self-supporting positive electrode active material layer through extrusion molding.

For details of one or more embodiments of this application, see the accompanying drawings and description below. Other features, purposes, and advantages of this application will become apparent from the specification, the accompanying drawings, and the claims.

### BRIEF DESCRIPTION OF DRAWINGS

Reference may be made to one or more of the accompanying drawings for the purpose of better describing and illustrating those embodiments or examples of the application disclosed herein. The additional details or examples used to describe the accompanying drawings should not be considered limitations on the scope of any one of the disclosed application, the currently described embodiments or examples, and the best mode of this application as currently understood.
FIG. 1 is a schematic diagram of a secondary battery according to an embodiment of this application.
FIG. 2 is an exploded view of the secondary battery according to the embodiment of this application in FIG. 1.
FIG. 3 is a schematic diagram of an electric apparatus using a secondary battery as a power source according to an embodiment of this application.

Description of reference signs:
1. secondary battery; 11. housing; 12. electrode assembly; and 13. cover plate.

### DESCRIPTION OF EMBODIMENTS

To make the objectives, technical solutions, and advantages of this application more comprehensible, the following describes this application in detail with reference to embodiments and accompanying drawings. It should be understood that the specific embodiments described herein are merely used to explain this application but are not intended to limit this application.

Unless otherwise defined, all technical and scientific terms used herein shall have the same meanings as commonly understood by those skilled in the art to which this application pertains. The terms used herein in the specification of this application are for description of specific embodiments only without any intention to limit this application. The term "and/or" used herein includes any and all combinations of one or more associated items listed.

An embodiment of this application provides a secondary battery.

Normally, the secondary battery includes a positive electrode plate, a negative electrode plate, an electrolyte, and a separator. In a charge and discharge process of the battery, active ions are intercalated and deintercalated between the positive electrode plate and the negative electrode plate. The electrolyte conducts ions between the positive electrode plate and the negative electrode plate. The separator is sandwiched between the positive electrode plate and the negative electrode plate to mainly prevent short circuit between the positive and negative electrodes and to allow active ions to pass through.

### Positive electrode plate

A positive electrode plate provided in this application includes a positive electrode current collector and a positive electrode active material layer provided on at least one surface of the positive electrode current collector. The positive electrode active material layer includes a positive electrode active material and a binder composite, where the binder composite includes a first binder and a second binder. The first binder includes at least one of polyvinylidene fluoride, acrylonitrile-acrylate copolymer, rubber, epoxy resin, polyurethane, and acrylate, and the second binder includes at least one of polytetrafluoroethylene, polyimide, polypropylene, polyethylene, ethylene vinyl acetate copolymer, and styrene-ethylene-butylene-styrene block copolymer.

The binder composite used in the positive electrode active material layer of the secondary battery of this application can undergo fibrillation to form a physical fiber network, allowing for a reduction in the amount of binder and an increase in the active material percentage, thereby improving the energy density of the battery. In addition, relying on the physical network, the binder in the physical fiber state can bind the active material layer without coating the active material surface to impede active ion transport, thereby improving the cycling performance and rate performance of the battery. Furthermore, the binder composite of this application can also ensure good adhesion between the active materials and between the active materials and the current collector, thereby reducing the internal resistance of the battery and further improving the cycling performance of the battery.

Both the first binder and the second binder can be characterized or tested using methods known in the art. For example, the first binder can be tested for functional groups, glass transition temperature, molecular weight, and the like by Fourier transform infrared (FT-IR), differential scanning calorimetry (DSC), and gel permeation chromatography (GPC). The second binder can be tested for fibrillation, crystallinity, and the like by scanning electron microscopy (SEM), X-ray diffraction (XRD), and differential scanning calorimetry (DSC).

In some embodiments, the rubber includes styrene-butadiene rubber and/or nitrile rubber.

In some embodiments, a mass ratio of the first binder to the second binder is 1 :(0.05 to 1.2). Optionally, the mass ratio of the first binder to the second binder is 1:(0.15 to 0.6). For example, the mass ratio of the first binder to the second binder may be 1:0.1, 1:0.2, 1:0.3, 1:0.4, 1:0.5, 1:0.6, 1:0.7, 1:0.8, 1:0.9, 1:1, or 1:1.1.

Controlling the mass ratio of the first binder to the second binder within a proper range can prevent the composite from being too viscous and causing difficulty in uniform dispersion when mixed with other materials, thus further improving the cycling performance of the battery. In addition, the proper mass ratio of the two also reduces the risk of roll sticking during rolling of the electrode plates, further increasing the yield rate.

In some embodiments, the first binder has a weight-average molecular weight of 0.6×10⁶ to 2×10⁶, and optionally, the first binder has a weight-average molecular weight of 0.8×10⁶ to 1.4×10⁶. For example, the first binder may have a weight-average molecular weight of 0.7×10⁶, 0.8×10⁶, 0.9×10⁶, 1×10⁶, 1.1×10⁶, 1.2×10⁶, 1.3×10⁶, 1.4×10⁶, 1.5×10⁶, 1.6×10⁶, 1.7×10⁶, 1.8×10⁶, or 1.9×10⁶. Controlling the weight-average molecular weight of the first binder within a proper range can provide sufficient adhesion while avoiding difficulties in dissolving the binder, preventing excessive dissolution time, excessive solvent usage, and excessive viscosity after dissolution, which otherwise affects uniform dispersion with other materials, and also avoiding adverse effects on the fibrillation of the second binder.

In some embodiments, the second binder has a weight-average molecular weight of 5×10⁶ to 50×10⁶, and optionally, the second binder has a weight-average molecular weight of 10×10⁶ to 30×10⁶. For example, the second binder may have a weight-average molecular weight of 6×10⁶, 7×10⁶, 8×10⁶, 9×10⁶, 10×10⁶, 11×10⁶, 12×10⁶, 13×10⁶, 14×10⁶, 15×10⁶, 16×10⁶, 17×10⁶, 18×10⁶, 19×10⁶, 20×10⁶, 21×10⁶, 22×10⁶, 23×10⁶, 24×10⁶, 25×10⁶, 26×10⁶, 27×10⁶, 28×10⁶, 29×10⁶, 30×10⁶ 31×10⁶ 32×10⁶ 33×10⁶, 34×10⁶, 35×10⁶ 36×10⁶ 37×10⁶ 38×10⁶, 39×10⁶, 40×10⁶, 41×10⁶, 42×10⁶, 43×10⁶, 44×10⁶, 45×10⁶, 46×10⁶, 47×10⁶, 48×10⁶, or 49×10⁶. Controlling the weight-average molecular weight of the second binder within a proper range can enable the second binder to be mixed to better uniformity with the material, and in addition, the fibrillated second binder is long enough to form a network structure and has sufficient bondage and adhesion to the positive electrode active material, thereby enhancing the flexibility of the electrode plate.

In some embodiments, the second binder has a median particle size by volume Dᵥ50 of 0.2 µm to 2 µm, and optionally, the second binder has a median particle size by volume Dᵥ50 of 0.5 µm to 1.2 µm. For example, the second binder may have a median particle size by volume Dᵥ50 of 0.4 µm, 0.6 µm, 0.8 µm, 1 µm, 1.2 µm, 1.4 µm, 1.6 µm, or 1.8 µm. The inventors have found that if the second binder has excessively small particle size, it is easy to cause agglomeration and the second binder is not easily dispersed; and if the second binder has excessively large particle size, it is easy to deposit at the bottom of the mixture, causing uneven dispersion of the slurry and increasing the internal resistance of the electrode plate, which affects the cycling performance of the battery to some extent. Controlling the median particle size by volume Dᵥ50 of the second binder within the range given in this application can further improve the cycling performance of the battery.

In this application, the median particle size by volume Dᵥ50 is a corresponding particle size when a cumulative volume distribution percentage of the material reaches 50%. For example, Dᵥ50 can be easily measured in accordance with a particle size distribution laser diffraction method in GB/T 19077-2016 by using a laser particle size analyzer, for example, a laser particle size analyzer of Malvern Master Size 3000 from Malvern Instruments Ltd. of UK.

In some embodiments, the second binder has a crystallinity greater than or equal to 80%, and optionally, the second binder has a crystallinity of 87% to 99%. For example, the second binder may have a crystallinity of 82%, 84%, 86%, 88%, 90%, 92%, 94%, 96%, 98%, or 100%. A proper crystallinity facilitates the slippage of the crystalline region such that the second binder is fully fibrillated and a probability of the second binder being present in the form of particles is reduced, which otherwise causes a decrease in the porosity of the electrode plate, affecting the active ion transport and reducing the rate performance of the battery.

In this application, the crystallinity can be tested using methods known in the art. For example, differential scanning calorimetry (DSC) is used to measure the crystallinity, and DSC can be used to measure heat released when the crystalline polymer is melted, where the heat is the heat of fusion ΔHf of the crystalline part of the polymer, and the heat of fusion of the polymer is proportional to the crystallinity thereof. Therefore, the crystallinity θ = heat of fusion of partial crystallization of polymer/heat of fusion of 100% crystallization of polymer × 100%, where the heat of fusion of 100% crystallization of polymer is given.

In some embodiments, the binder composite has a mass percentage of 1% to 5% in the positive electrode active material layer, for example, the binder composite may have a mass percentage of 2%, 3%, or 4%. Controlling the amount of binder within a proper range provides sufficient adhesion while avoiding a decrease in energy density of the battery as much as possible.

In some embodiments, the positive electrode active material layer has a thickness of 50 µm to 500 µm, and optionally, the positive electrode active material layer has a thickness of 100 µm to 300 µm. For example, the positive electrode active material layer may have a thickness of 100 µm, 150 µm, 200 µm, 250 µm, 300 µm, 350 µm, 400 µm, or 450 µm. The thickness herein is a thickness of the positive electrode active material layer on one side. To be specific, if the positive electrode active material layer of the same thickness is applied on two sides of the electrode plate, the total thickness of the active material layer in the electrode plate is twice the thickness herein. With the use of the binder composite of this application, a solid content of the positive electrode slurry can be greatly increased to obtain a positive electrode active material layer with good strength, and the binder composite can form a physical fiber network to allow good flexibility of the positive electrode active material layer, such that a thicker positive electrode active material layer can be prepared and the energy density of the battery can be greatly increased.

In this application, the thickness can be tested using a method known in the art, for example, using a micrometer thickness gauge.

The micrometer is used to measure the total thickness h1 of the positive electrode plate and the thickness h2 of the positive electrode current collector. When the positive electrode active material layer is provided on only one side of the positive electrode current collector, the thickness of the single-sided positive electrode active material layer is equal to h1 - h2; and when the positive electrode active material layer is provided on two sides of the positive electrode current collector, the thickness of the positive electrode active material layer is equal to (h1 - h2)/2.

The positive electrode active material layer of this application is self-supporting. Self-supporting means that the positive electrode active material layer can maintain mechanical integrity even without the presence of a current collector.

In some embodiments, the positive electrode current collector may be a metal foil current collector or a composite current collector. For example, an aluminum foil may be used as the metal foil. The composite current collector may include a polymer material matrix layer and a metal layer formed on at least one surface of the polymer material matrix layer. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

The positive electrode current collector has two opposite surfaces in its thickness direction, and the positive electrode active material layer is disposed on either or both of the two opposite surfaces of the positive electrode current collector.

The positive electrode active material layer further includes a positive electrode active material. In some embodiments, the positive electrode active material may be a well-known positive electrode active material used for batteries in the art. For example, the positive electrode active material may include at least one of the following materials: olivine-structured lithium-containing phosphate, lithium-containing transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium-containing transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium manganese cobalt oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), and lithium nickel aluminum cobalt oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the positive electrode active material includes olivine-structured lithium-containing phosphate, and the positive electrode active material has a median particle size by volume Dᵥ50 of 1.0 µm to 2.0 µm, and optionally, the positive electrode active material may have a median particle size by volume Dᵥ50 of, for example, 1.2 µm, 1.4 µm, 1.6 µm, or 1.8 µm.

In some embodiments, the positive electrode active material includes lithium-containing transition metal oxide, and the positive electrode active material has a median particle size by volume Dᵥ50 of 3.0 µm to 10 µm, and optionally, the positive electrode active material may have a median particle size by volume Dᵥ50 of, for example, 3 µm, 5 µm, 7 µm, or 9 µm.

The proper particle size range enables the positive electrode active material to be dispersed to better uniformity in the slurry and to better match the size of the network structure formed by the second binder through fibrillation, leading to a more flexible electrode plate. In addition, the presence of the network structure facilitates the transport of lithium ions, such that a proper positive electrode active material combined with the binder composite of this application can further enhance the charge/discharge performance of the battery at a high rate and can effectively increase the capacity retention rate.

In some embodiments, the positive electrode active material includes olivine-structured lithium-containing phosphate, and the positive electrode active material has a specific surface area of 10 m²/g to 15 m²/g, and optionally, the positive electrode active material may alternatively have a specific surface area of, for example, 11 m²/g, 12 m²/g, 13 m²/g, or 14 m2/g.

In some embodiments, the positive electrode active material includes lithium-containing transition metal oxide, and the positive electrode active material has a specific surface area of 0.4 m²/g to 2.0 m²/g, and optionally, the positive electrode active material may alternatively have a specific surface area of, for example, 0.6 m²/g, 0.8 m²/g, 1 m²/g, 1.2 m²/g, 1.4 m²/g, 1.8 m²/g, or 1.8 m²/g.

Controlling the specific surface area of the positive electrode active material within a proper range can avoid excessively high surface roughness of the particles due to an excessively large specific surface area, which otherwise is prone to cause the network structure formed by the second binder to break easily during shear mixing, and avoid insufficient friction between the active material and the second binder due to an excessively small specific surface area, which otherwise makes it difficult to achieve fibrillation of the second binder; and in addition, an excessively small specific surface area means that the active material particles are excessively large, which is not conducive to improving the kinetic performance of the battery.

In this application, the specific surface area can be tested using a method known in the art, for example, gas adsorption (nitrogen adsorption method) specific surface area determination, national standard GB/T 19587-2004 "Determination of the specific surface area of solids by gas adsorption using the BET method".

In some embodiments, the positive electrode active material has a mass percentage of 93% to 98% in the positive electrode active material layer. For example, the positive electrode active material may have a mass percentage of 94%, 95%, 96%, or 97%.

In some embodiments, the positive electrode active material layer further includes a conductive agent. For example, the conductive agent may include at least one of superconducting carbon, acetylene black, carbon black, Ketjen black, carbon dots, carbon nanotubes, graphene, and carbon nanofiber.

In some embodiments, the conductive agent has a mass percentage of 0.2% to 2% in the positive electrode active material layer. For example, the conductive agent may have a mass percentage of 0.4%, 0.6%, 0.8%, 1%, 1.2%, 1.4%, 1.6%, or 1.8%.

Controlling the amounts of the positive electrode active material and the conductive agent within proper ranges can better match the binder composite provided in this application and lead to more balanced overall performance of the prepared positive electrode plate.

This application further provides a preparation method of the positive electrode plate according to one or more of the preceding embodiments, where the preparation method includes:
providing the positive electrode current collector;
preparing a positive electrode slurry: including mixing the first binder, the second binder, and the positive electrode active material;
preparing the positive electrode slurry into a self-supporting positive electrode active material layer; and
compositing the positive electrode active material layer and the positive electrode current collector.

In some embodiments, the positive electrode slurry is prepared using the following steps: mixing the first binder with a solvent to prepare a binder solution; dry mixing the second binder and the positive electrode active material to prepare a mixture; and shear mixing the binder solution with the mixture.

Dry mixing the positive electrode active material and materials such as the second binder allows these materials to be initially dispersed and to be mixed to better uniformity during shear mixing with a small amount of the binder solution, such that the positive electrode active material can fill and distribute in the network structure formed by fibrillation of the second binder, improving the electrical performance and mechanical performance of the electrode plate.

Optionally, conventional additives for the positive electrode active material layer, such as conductive agents and dispersants, may also be introduced during dry mixing.

In some embodiments, the dry-mixing preparation of the mixture is performed at a temperature of 5°C to 20°C. For example, the dry-mixing preparation of the mixture may be performed at a temperature of 8°C, 10°C, 12°C, 15°C, or 18°C.

In some embodiments, the dry-mixing preparation of the mixture is performed at a rotation speed of 500 rpm to 4000 rpm. Optionally, the dry-mixing preparation of the mixture is performed at a rotation speed of 1000 rpm to 2500 rpm. For example, the dry-mixing preparation of the mixture may be performed at a rotation speed of 1000 rpm, 1500 rpm, 2000 rpm, 2500 rpm, 3000 rpm, or 3500 rpm.

In some embodiments, the dry-mixing preparation of the mixture is performed for 20 min to 120 min. Optionally, the dry-mixing preparation of the mixture is performed for 30 min to 90 min. For example, the dry-mixing preparation of the mixture may be performed for 40 min, 60 min, 80 min, or 100 min.

The dry mixing performed at a proper temperature, rotation speed, and time allows the materials to be mixed to uniformity without irreversible damage to the materials, and prevents the second binder from pre-fibrillation, which otherwise adversely affects the dispersion of the materials. Especially, the control of the dry mixing temperature is particularly important.

In some embodiments, the shear mixing is performed at a temperature of 25°C to 200°C. Optionally, the shear mixing is performed at a temperature of 45°C to 120°C. The shear mixing may alternatively be performed at a temperature of, for example, 30°C, 35°C, 40°C, 45°C, 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, 140°C, 145°C, 150°C, 155°C 160°C, 165°C, 170°C, 175°C, 180°C, 185°C, 190°C, or 195°C.

In some embodiments, the shear mixing is performed at a rotation speed of 10 rpm to 200 rpm. Optionally, the shear mixing is performed at a rotation speed of 15 rpm to 120 rpm. The shear mixing may alternatively be performed at a rotation speed of, for example, 20 rpm, 30 rpm, 40 rpm, 50 rpm, 60 rpm, 70 rpm, 80 rpm, 90 rpm, 100 rpm, or 110 rpm.

In some embodiments, the shear mixing is performed for 5 min to 60 min. Optionally, the shear mixing is performed for 20 min to 45 min. The shear mixing may alternatively be performed for, for example, 10 min, 15 min, 20 min, 25 min, 30 min, 35 min, 40 min, 45 min, 50 min, or 55 min.

Proper shear mixing conditions are conducive to mixing the materials to uniformity and facilitate adequate fibrillation of the second binder. In particular, the shear mixing temperature is kept within a proper range such that the second binder can undergo slippage of the crystal region and produce fibrils, but does not denature and lose its adhesion. The rotation speed of the shear mixing is controlled within a proper range, such that the fibrils are not damaged due to excessive shear while sufficient shear force is provided to make the second binder be fibrillated.

In some embodiments, the solid content of the positive electrode slurry is higher than or equal to 75%, optionally in a range of 75% to 85%. The solid content of the positive electrode slurry may alternatively be, for example, 78%, 80%, 82%, 84%, 86%, 88%, 90%, 92%, 94%, 96%, or 98%. The solid content of the positive electrode slurry of this application is higher than the solid content of the positive electrode slurry obtained through the conventional wet coating, such that the floating of binder and conductive agent due to the drying in the conventional wet coating process can be effectively alleviated, where the floating of binder and conductive agent reduces the porosity of the positive electrode active material layer and affects the active ion transport. Therefore, the cycling performance of the battery can be further improved.

In some embodiments, the positive electrode slurry is prepared into a self-supporting positive electrode active material layer through extrusion molding. The extrusion molding preparation method is easier for large-scale industrial production and can prepare a thicker active material layer than the conventional wet coating process, and is conducive to further increasing the energy density of the battery.

### Negative electrode plate

The negative electrode plate includes a negative electrode current collector and a negative electrode active material layer disposed on at least one surface of the negative electrode current collector, and the negative electrode active material layer includes a negative electrode active material.

For example, the negative electrode current collector includes two opposite surfaces in its thickness direction, and the negative electrode active material layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix layer and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material in the negative electrode active material layer may be a well-known negative electrode active material used for batteries in the art. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One type of these negative electrode active materials may be used alone, or two or more of them may be used in combination.

In some embodiments, the negative electrode active material layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode active material layer further optionally includes other promoters such as a thickener (for example, sodium carboxymethyl cellulose (CMC-Na)).

In some embodiments, the negative electrode active material layer may be prepared in the following manner: the foregoing constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode active material layer.

### Electrolyte

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolyte salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonat, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the liquid electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

### Separator

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

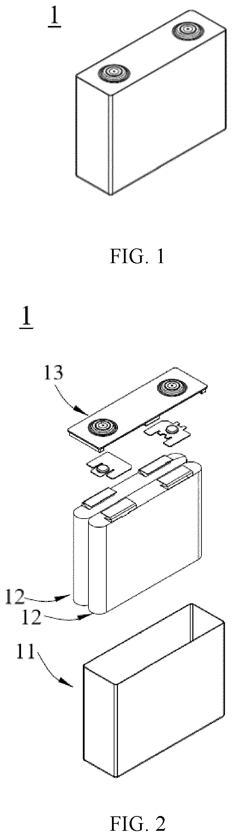

This application does not impose any special limitations on a shape of the secondary battery, and the secondary battery may be cylindrical, rectangular, or of any other shapes. For example, FIG. 1 shows a secondary battery 1 of a rectangular structure as an example.

In some embodiments, referring to FIG. 2, the outer package may include a housing 11 and a cover plate 13. The housing 11 may include a base plate and a side plate connected onto the base plate, and the base plate and the side plate enclose an accommodating cavity. The housing 11 has an opening communicating with the accommodating cavity, and the cover plate 13 can cover the opening to close the accommodating cavity. The positive electrode plate, the negative electrode plate, and the separator may be made into an electrode assembly 12 through winding or lamination. The electrode assembly 12 is packaged in the accommodating cavity. The electrolyte infiltrates the electrode assembly 12. The secondary battery 1 may include one or more electrode assemblies 12, and persons skilled in the art may make choices according to actual requirements.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device, an electric vehicle, an electric train, a ship, a satellite system, an energy storage system, or the like, but is not limited thereto. The mobile device may be, for example, a mobile phone or a notebook computer; and the electric vehicle may be, for example, a battery electric vehicle, a hybrid electric vehicle, a plug-in hybrid electric vehicle, an electric bicycle, an electric scooter, an electric golf vehicle, or an electric truck, but is not limited thereto.

The secondary battery, the battery module, or the battery pack may be selected for the electric apparatus based on requirements for using the electric apparatus.

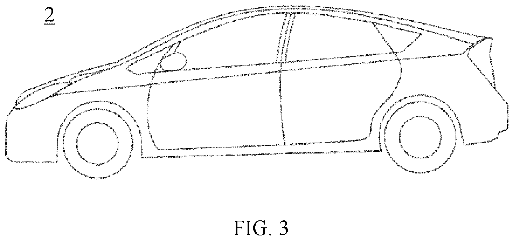

FIG. 3 shows an electric apparatus 2 as an example. This electric apparatus is a battery electric vehicle, a hybrid electric vehicle, a plug-in hybrid electric vehicle, or the like.

In another example, the apparatus may be a mobile phone, a tablet computer, a notebook computer, or the like.

The following further describes this application in detail with reference to specific examples and comparative examples. For experimental parameters not specified in the following specific examples, priority reference is given to the guidelines given in this application, and reference may also be made to experimental manuals in the art or other experimental methods known in the art, or to the experimental conditions recommended by a manufacturer. It can be understood that the instruments and raw materials used in the following examples are more specific and may not be limited thereto in other specific examples; and the weights of the relevant components mentioned in the embodiments of the specification of this application can not only refer to the specific content of each component, but also indicate the proportional relation between the weights of the components. Therefore, any content of the relevant components scaled up or down in accordance with the specification of the embodiments of this application falls within the scope of this application. Specifically, the weight described in the specification of the embodiments of this application may be in µg, mg, g, kg, and other units of mass known in the chemical field. The reagents or instruments used are all conventional products that are commercially available if no manufacturer is indicated.

### Example 1

### (1) Preparation of positive electrode plate

A positive electrode active material lithium iron phosphate (with a particle size Dᵥ50 of 1.6 µm), a conductive agent carbon black, and a second binder PTFE (polytetrafluoroethylene, with a particle size Dᵥ50 of 0.5 µm and a weight-average molecular weight of 19×10⁶) were added at a weight ratio of 99:0.8:0.2 into a dual planetary mixer for dry mixing to obtain a mixture; where the dry mixing was performed at a temperature of 15°C and a rotor speed of 2000 rpm for 60 min.

A first binder PVDF (polyvinylidene fluoride, with a weight-average molecular weight of 1.1×10⁶) was dissolved in a solvent N-methylpyrrolidone (NMP), a weight ratio of PVDF to PTFE was controlled at 1:0.2, and after fully dissolving, a binder solution was obtained.

The mixture and the binder solution were added at a ratio into a kneading machine. During which, it should be ensured that the solid content in the well mixed material was 75% and shear mixing was performed at a shear temperature of 70°C and a rotor speed of 16 rpm for 30 min, such that a positive electrode slurry was obtained.

The positive electrode slurry was extruded by a single-screw extruder to form a thick blank, the blank undergone rolling and thinning to form a positive electrode active material layer, and the positive electrode active material layer was composited with a positive electrode current collector aluminum foil, followed by drying, cold pressing, and slitting, to obtain a positive electrode plate.

### (2) Preparation of negative electrode plate

A negative electrode active material artificial graphite, a conductive agent acetylene black, a binder styrene-butadiene rubber (SBR), and a thickener sodium carboxymethyl cellulose (CMC-Na) were dissolved at a weight ratio of 96.8:0.7:1.5:1 in a solvent deionized water and were mixed to uniformity with the solvent deionized water to obtain a negative electrode slurry. The negative electrode slurry was evenly applied onto a negative electrode current collector copper foil, followed by drying, cold pressing, and slitting, to obtain a negative electrode plate.

### (3) Preparation of electrolyte

In an argon atmosphere glove box (H₂O < 0.1 ppm, and O₂ < 0.1 ppm), organic solvents ethylene carbonate (EC) and methyl ethyl carbonate (EMC) were mixed well at a volume ratio of 3:7 to obtain an organic solvent, 12.5% lithium salt LiPF₆ was added to dissolve in the organic solvent, and the solution was well stirred to obtain a uniform electrolyte.

### (4) Separator

A polypropylene film was used as a separator.

### (5) Preparation of secondary battery

The positive electrode plate, the separator, and the negative electrode plate prepared in the preceding steps were stack in sequence, such that the separator was sandwiched between the positive electrode plate and negative electrode plate to provide separation. Then the resulting stack was wound to obtain an electrode assembly. The electrode assembly was placed in an aluminum shell. Then the electrolyte was injected, and processes such as packaging, standing, formation, and aging were performed to obtain a battery.

### Example 2

This example was basically the same as Example 1, except that the weight-average molecular weight of the first binder was 0.6×10⁶.

### Example 3

This example was basically the same as Example 1, except that the weight-average molecular weight of the first binder was 2×10⁶.

### Example 4

This example was basically the same as Example 1, except that the particle size Dᵥ50 of the second binder was 0.2 µm.

### Example 5

This example was basically the same as Example 1, except that the particle size Dᵥ50 of the second binder was 2 µm.

### Example 6

This example was basically the same as Example 1, except that the weight-average molecular weight of the second binder was 5×10⁶.

### Example 7

This example was basically the same as Example 1, except that the weight-average molecular weight of the second binder was 50×10⁶.

### Example 8

This example was basically the same as Example 1, except that the mass ratio of the first binder to the second binder was 1:0.05.

### Example 9

This example was basically the same as Example 1, except that the mass ratio of the first binder to the second binder was 1:1.2.

### Example 10

This example was basically the same as Example 1, except that Dᵥ50 of the positive electrode active material was 1 µm.

### Example 11

This example was basically the same as Example 1, except that Dᵥ50 of the positive electrode active material was 2 µm.

### Example 12

This example was basically the same as Example 1, except that the dry mixing was performed at a temperature of 5°C.

### Example 13

This example was basically the same as Example 1, except that the dry mixing was performed at a temperature of 20°C.

### Example 14

This example was basically the same as Example 1, except that the shear mixing was performed at a temperature of 25°C.

### Example 15

This example was basically the same as Example 1, except that the shear mixing was performed at a temperature of 200°C.

### Example 16

This example was basically the same as Example 1, except that the positive electrode plate was prepared as follows.

A ternary positive electrode active material LiNi_{0.5}Co_{0.2}Mn_{0.3}O₂ (with a particle size Dᵥ50 of 4.3 µm), a conductive agent carbon black, and a second binder ethylene vinyl acetate copolymer (with a particle size Dᵥ50 of 1.4 µm and a weight-average molecular weight of 8×10⁶) were added at a weight ratio of 93:6.5:0.5 into a dual planetary mixer for dry mixing to obtain dry mixed powder; where the dry mixing was performed at a temperature of 10°C and a rotor speed of 2500 rpm for 90 min.

A first binder PVDF (polyvinylidene fluoride, with a weight-average molecular weight of 0.9×10⁶) was dissolved in a solvent N-methylpyrrolidone (NMP), a weight ratio of PVDF to ethylene vinyl acetate copolymer was controlled to be 1:1, and after fully dissolving, a PVDF solution was obtained.

The dry mixed powder and the PVDF solution were added at a ratio into a kneading machine. During which, it should be ensured that the solid content in the well mixed material was 85% and shear mixing was performed at a shear temperature of 150°C and a rotor speed of 100 rpm for 30 min, such that a mixture was obtained.

The mixture was extruded by a single-screw extruder to form a thick blank, the blank undergone rolling and thinning and then was composited with a positive electrode current collector aluminum foil, followed by drying, cold pressing, and slitting, to obtain a positive electrode plate.

### Example 17

This example was basically the same as Example 1, except that the positive electrode plate was prepared as follows.

A ternary positive electrode active material LiNi_{0.8}Co_{0.1}Mn_{0.1}O₂ (with a particle size Dᵥ50 of 8.8 µm), a conductive agent carbon black, and a second binder PTFE (with a particle size Dᵥ50 of 1.1 µm and a weight-average molecular weight of 47×10⁶) were added at a weight ratio of 96.8:2.7:0.5 into a dual planetary mixer for dry mixing to obtain dry mixed powder; where the dry mixing was performed at a temperature of 5°C and a rotor speed of 3500 rpm for 40 min.

A first binder acrylonitrile-acrylate copolymer (with a weight-average molecular weight of 1.8×10⁶) was dissolved in a solvent N-methylpyrrolidone (NMP), a weight ratio of acrylonitrile-acrylate copolymer to PTFE was controlled to be 1:1, and after fully dissolving, an acrylonitrile-acrylate copolymer solution was obtained.

The dry mixed powder and the acrylonitrile-acrylate copolymer solution were added at a ratio into a kneading machine. During which, it should be ensured that the solid content in the well mixed material was 78% and shear mixing was performed at a shear temperature of 45°C and a rotor speed of 40 rpm for 45 min, such that a mixture was obtained.

The mixture was extruded by a single-screw extruder to form a thick blank, the blank undergone rolling and thinning and then was composited with a positive electrode current collector aluminum foil, followed by drying, cold pressing, and slitting, to obtain a positive electrode plate.

### Example 18

This example was basically the same as Example 1, except that the weight-average molecular weight of the first binder was 0.5×10⁶.

### Example 19

This example was basically the same as Example 1, except that the weight-average molecular weight of the first binder was 2.2×10⁶.

### Example 20

This example was basically the same as Example 1, except that the particle size Dᵥ50 of the second binder was 0.1 µm.

### Example 21

This example was basically the same as Example 1, except that the particle size Dᵥ50 of the second binder was 2.5 µm.

### Example 22

This example was basically the same as Example 1, except that the weight-average molecular weight of the second binder was 4×10⁶.

### Example 23

This example was basically the same as Example 1, except that the weight-average molecular weight of the second binder was 52×10⁶.

### Example 24

This example was basically the same as Example 1, except that the mass ratio of the first binder to the second binder was 1:0.01.

### Example 25

This example was basically the same as Example 1, except that the mass ratio of the first binder to the second binder was 1:1.4.

### Example 26

This example was basically the same as Example 1, except that Dᵥ50 of the positive electrode active material was 0.5 µm.

### Example 27

This example was basically the same as Example 1, except that Dᵥ50 of the positive electrode active material was 3 µm.

### Example 28

This example was basically the same as Example 1, except that the dry mixing was performed at a temperature of 0°C.

### Example 29

This example was basically the same as Example 1, except that the dry mixing was performed at a temperature of 25°C.

### Example 30

This example was basically the same as Example 1, except that the shear mixing was performed at a temperature of 20°C.

### Example 31

This example was basically the same as Example 1, except that the shear mixing was performed at a temperature of 220°C.

### Comparative Example 1

This example was basically the same as Example 1, except that the positive electrode plate was prepared using the following method.

A positive electrode active material lithium iron phosphate, a binder polyvinylidene fluoride (PVDF), and a conductive agent acetylene black were dissolved at a mass ratio of 97.3:0.7:2.0 in a solvent N-methylpyrrolidone (NMP) and well stirred and mixed to obtain a positive electrode slurry with a solid content of 55%. The positive electrode slurry was evenly applied onto a positive electrode current collector aluminum foil, followed by drying, cold pressing, and slitting, to obtain a positive electrode plate.

### Comparative Example 2

This example was basically the same as Comparative Example 1, except that the negative electrode plate was prepared using the following method.

A negative electrode active material artificial graphite, a conductive agent carbon black, and a second binder PTFE were added at a weight ratio of 99:0.8:0.2 into a dual planetary mixer for dispersion at a temperature of 15°C and a rotor speed of 2000 rpm for 60 minutes, followed by fully and evenly mixing, to obtained dry mixed powder; where the dry mixing was performed at a temperature of 15°C and a rotor speed of 2000 rpm for 60 min.

A first binder PVDF (polyvinylidene fluoride, with a weight-average molecular weight of 1.1×10⁶) was dissolved in NMP (N-methylpyrrolidone), a weight ratio of PVDF to PTFE was controlled at 1:0.2, and after fully dissolving, a PVDF solution was obtained.

The dry mixed powder and the PVDF solution were added at a ratio into a kneading machine. During which, it should be ensured that the solid content in the well mixed material was 75% and shear mixing was performed at a shear temperature of 70°C and a rotor speed of 16 rpm for 30 min, such that a mixture was obtained.

The mixture was extruded by a single-screw extruder to form a thick blank, the blank undergone rolling and thinning and then was composited with a negative electrode current collector copper foil, followed by drying, cold pressing, and slitting, to obtain a negative electrode plate.

### Characterization test

The blanks or finished batteries prepared in the preceding examples and comparative examples were subjected to the following characterization tests.

### (1) Slurry viscosity

The dynamic viscosity of the slurry was measured using an Anton Paar rotational rheometer at a shear rate of 0.1 s⁻¹ to 100 s⁻¹ for 31 points, and a consistency coefficient was obtained after 31 viscosity results were fitted, where the consistency coefficient could characterize the viscosity of the slurry.

### (2) Thickness of (single-sided) positive electrode active material layer

The positive electrode plates prepared in the examples and comparative examples were taken, and a micrometer was used to measure the total thickness h1 of the positive electrode plate and the thickness h2 of the positive electrode current collector. When the positive electrode active material layer was provided on only one side of the positive electrode current collector, the thickness of the positive electrode active material layer was equal to h1 - h2; and when the positive electrode active material layer was provided on two sides of the positive electrode current collector, the thickness of the positive electrode active material layer was equal to (h1 - h2)/2.

### (3) Mechanical strength of positive electrode thick blank

The thick blank that had been extruded but not yet composited with the current collector was cut into long strips of 15 mm×150 mm (width × length). An INSTRON-5965 tensile testing machine was used for a tensile test. The distance between the fixtures was 80 mm, and the tensile speed was 10 mm/min. After the test was completed, the load and fixture displacement data in the tensile process could be obtained, and the tensile strength and deformation value in the tensile process could be obtained by calculation, where tensile strength = load value/(strip width × strip thickness), and deformation = displacement value/distance between fixtures. A tensile curve could be obtained by plotting the tensile strength against the deformation. The highest point of the curve means that the strip breaks, and the tensile strength corresponding to the highest point is the mechanical strength of the thick blank.

Note: The mechanical strength of the thick blank can reflect the adhesion of the binder, especially the fibrillation of the second binder, for which, a higher degree of fibrillation indicates a more solid physical network formed and higher strength of a film layer prepared.

### (4) Test for flexibility of positive electrode plate

Winding mandrels of different diameters were taken and sorted in order. The diameter difference between the winding mandrels was 1 mm. The positive electrode plates prepared in the examples and comparative examples were attached to the winding mandrels of different diameters. Whether there were cracks was observed until one of the positive electrode plates on two adjacent winding mandrels had no cracks and the other had cracks, and the diameter of the winding mandrel with the positive electrode plate free of cracks was recorded as an index for evaluating the flexibility of the positive electrode plate.

Note: A smaller diameter recorded of the winding mandrel indicates better flexibility.

### (5) Test for peeling force of positive electrode plate

The electrode plate was cut into long strips of 400 mm × 30 mm (length × width) with a customized knife die. A flat thin steel plate of about 200 mm to 300 mm in length and 40 mm to 60 mm in width was taken, a strip of double-sided tape (with a length greater than the sample test length and a width of 20 mm) was put in the center of the steel plate, and smoothed with force to ensure that the double-sided tape was closely attached to the center of the steel plate. The protective layer of the double-sided tape was removed and the electrode plate was attached to the tape. The steel plate fixedly pasted with the electrode plate was inserted into a lower fixture of a tensile machine and fixed vertically. The electrode plate with no tape was inserted into an upper fixture and fixed such that the electrode plate attached to the tape had an angle of 180° with respect to the electrode plate fixed in the upper fixture. After the test sample was fixed, calibration reset was performed, the test width was set, the electrode plate peeling length was 50 mm, the peeling speed was 100 mm/min, and then the test was started. After the test was completed, the load and fixture displacement data in the peeling process could be obtained, and the peeling force could be obtained through calculation: peeling force = load/double-sided tape width. A peeling force curve could be obtained by plotting the peeling force against the displacement. The peeling force corresponding to the stable part of the curve is the peeling force of the electrode plate.

### (6) Cycling performance test

Battery capacity retention rate test process was as follows: at 25°C, the batteries prepared in the examples and comparative examples were constant-current charged at 1/3C to 3.6 V (to 3.6 V for lithium iron phosphate positive electrode material, and to 4.2 V for ternary positive electrode material), then constant-voltage charged to a current of 0.05C, left standing for 5 min, and then discharged at 1/3C to 2.5 V (to 2.5 V for lithium iron phosphate positive electrode material, and to 2.8 V for ternary positive electrode material). The resulting capacities were recorded as the initial capacities C₀. The preceding steps were repeated for the same battery and the discharged capacity Cₙ after the n-th cycle was recorded, and the battery capacity retention rate Pₙ after each cycle = Cₙ/C₀ × 100%.

In this test, the first cycle corresponds to n = 1, the second cycle corresponds to n = 2, ..., and the 300-th cycle corresponds to n = 300. The corresponding battery capacity retention rate data, that is, the value of P₃₀₀, in Table 1 are measured after 300 cycles under the preceding test conditions.

### (7) Test of 5C charge rate performance

At 25°C, the secondary batteries the examples and comparative examples were constant-current charged at 1/3C to 3.6 V (to 3.6 V for lithium iron phosphate positive electrode material, and to 4.2 V for ternary positive electrode material), and then constant-voltage charged to a current of 0.05C and left standing for 5 min. The charge capacities at this time point were recorded, which were the initial charge capacities. The secondary batteries were left standing for 5 min, then constant-current discharged at 1/3C to 2.5 V (to 2.5 V for lithium iron phosphate positive electrode material, and to 2.8 V for ternary positive electrode material), and then left standing for 30 min. The secondary batteries were constant-current charged at 5C to 3.6 V (to 3.6 V for lithium iron phosphate positive electrode material, and to 4.2 V for ternary positive electrode material), and then constant-voltage charged to a current of 0.05C and left standing for 5 min. The charge capacities were recorded at this time point. Battery capacity retention rate (%) at 5C charge rate = 5C charge capacity/1/3C charge capacity × 100%.

The results obtained are included in Table 1:

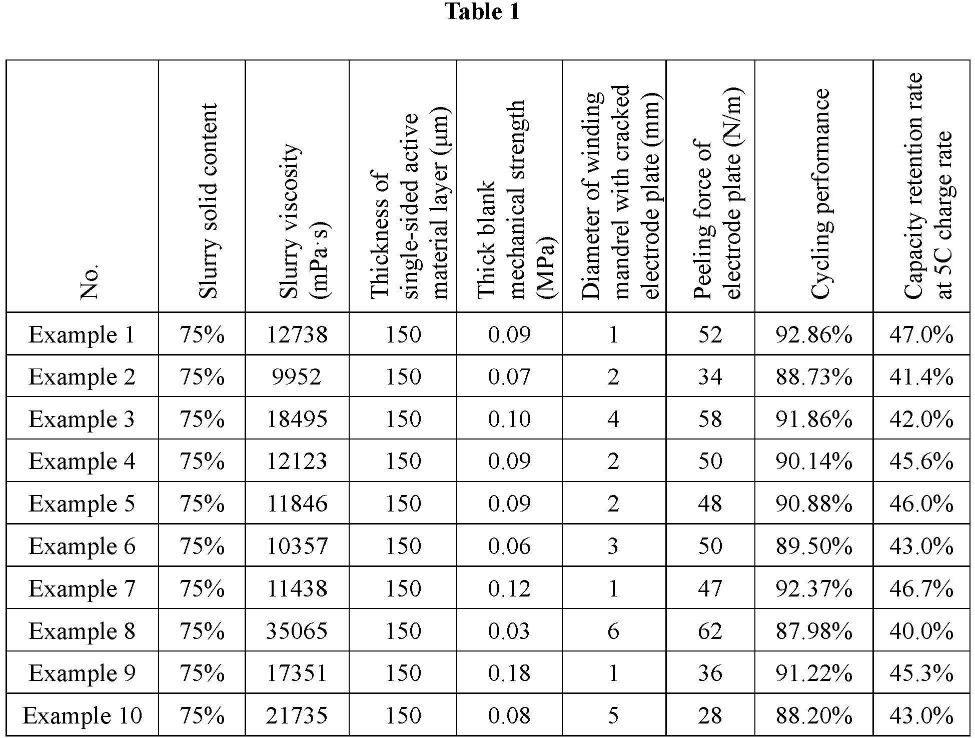

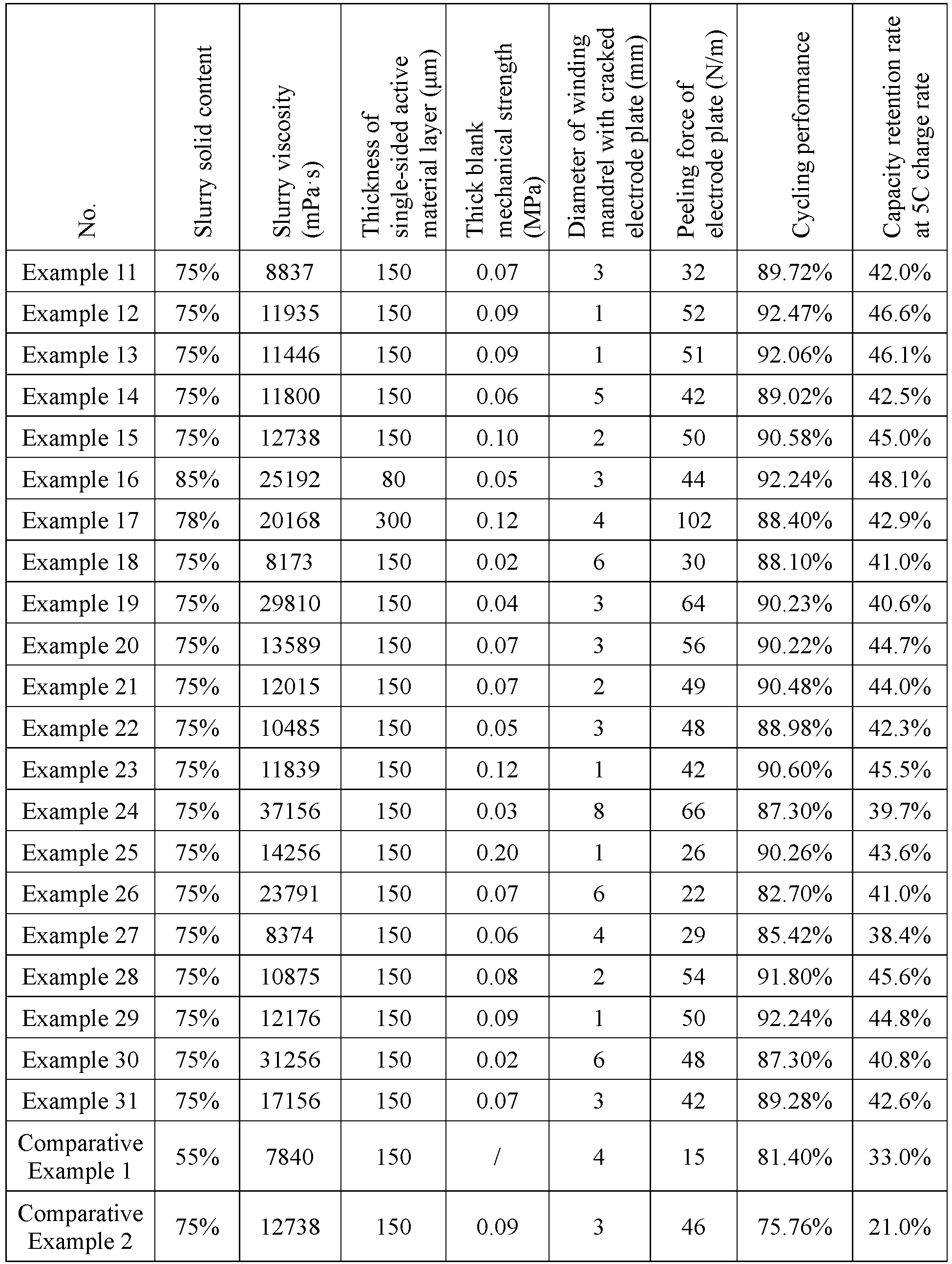

It can be seen from Table 1 that the positive electrode plates in the examples include the binder composite of this application, and thus the batteries can provide both better cycling performance and rate performance. The positive electrode plate in Comparative Example 1, which is commonly used in the industry, does not include the binder composite of this application, and both the cycling performance and rate performance of the battery are poor. Due to the low solid content during preparation of the electrode plate, only the wet coating method can be used, for which thick blanks cannot be prepared through extrusion molding. The negative electrode in Comparative Example 2 uses the binder composite of this application. Since the binder composite is poorly adapted to the negative electrode, the cycling performance and rate performance of the battery are also poor.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this patent. It should be noted that those of ordinary skill in the art may further make several modifications and improvements without departing from the concept of this application, and these modifications and improvements also fall within the protection scope of this application. Therefore, the protection scope of this application should be subject to the appended claims.

## Claims

1. A secondary battery, comprising a positive electrode plate, wherein the positive electrode plate comprise a positive electrode current collector and a positive electrode active material layer provided on at least one surface of the positive electrode current collector, the positive electrode active material layer comprises a positive electrode active material and a binder composite, and the binder composite comprises a first binder and a second binder; and
the first binder comprises at least one of polyvinylidene fluoride, acrylonitrile-acrylate copolymer, rubber, epoxy resin, polyurethane, and acrylate, and the second binder comprises at least one of polytetrafluoroethylene, polyimide, polypropylene, polyethylene, ethylene vinyl acetate copolymer, and styrene-ethylene-butylene-styrene block copolymer.

2. The secondary battery according to claim 1, **characterized in that** a mass ratio of the first binder to the second binder is 1:(0.05 to 1.2); and optionally, the mass ratio of the first binder to the second binder is 1:(0.15 to 0.6).

3. The secondary battery according to claim 1 or 2, **characterized in that** the first binder has a weight-average molecular weight of 0.6×10⁶ to 2×10⁶; and optionally, the first binder has a weight-average molecular weight of 0.8×10⁶ to 1.4×10⁶.

4. The secondary battery according to any one of claims 1 to 3, **characterized in that** the second binder has a weight-average molecular weight of 5×10⁶ to 50×10⁶; and optionally, the second binder has a weight-average molecular weight of 10×10⁶ to 30×10⁶.

5. The secondary battery according to any one of claims 1 to 4, **characterized in that** the second binder has a particle size Dᵥ50 of 0.2 µm to 2 µm; and optionally, the second binder has a particle size Dᵥ50 of 0.5 µm to 1.2 µm.

6. The secondary battery according to any one of claims 1 to 5, **characterized in that** the second binder has a crystallinity greater than or equal to 80%; and optionally, the second binder has a crystallinity of 87% to 99%.

7. The secondary battery according to any one of claims 1 to 6, **characterized in that** the binder composite has a mass percentage of 1% to 5% in the positive electrode active material layer.

8. The secondary battery according to any one of claims 1 to 7, **characterized in that** the positive electrode active material comprises olivine-structured lithium-containing phosphate, and the positive electrode active material has a median particle size by volume Dᵥ50 of 1.0 µm to 2.0 µm; or
the positive electrode active material comprises lithium-containing transition metal oxide, and the positive electrode active material has a median particle size by volume Dᵥ50 of 3.0 µm to 10 µm.

9. The secondary battery according to any one of claims 1 to 8, **characterized in that** the positive electrode active material comprises olivine-structured lithium-containing phosphate, and the positive electrode active material has a specific surface area of 10 m²/g to 15 m²/g; or
the positive electrode active material comprises lithium-containing transition metal oxide, and the positive electrode active material has a specific surface area of 0.4 m²/g to 2.0 m²/g.

10. The secondary battery according to any one of claims 1 to 9, **characterized in that** the positive electrode active material layer has a thickness of 50 µm to 500 µm; and optionally, the positive electrode active material layer has a thickness of 100 µm to 300 µm.

11. The secondary battery according to any one of claims 1 to 10, **characterized in that** the positive electrode active material layer is self-supporting.

12. An electric apparatus, comprising the secondary battery according to any one of claims 1 to 11.

13. A preparation method of the secondary battery according to any one of claims 1 to 11, comprising preparing the positive electrode plate using the following steps:
providing the positive electrode current collector;
preparing a positive electrode slurry: comprising mixing the first binder, the second binder, and the positive electrode active material;
preparing the positive electrode slurry into a self-supporting positive electrode active material layer; and
compositing the positive electrode active material layer and the positive electrode current collector.

14. The preparation method according to claim 13, **characterized by** comprising preparing the positive electrode slurry using the following steps:
mixing the first binder with a solvent to prepare a binder solution;
dry mixing the second binder and the positive electrode active material to prepare a mixture; and
shear mixing the binder solution with the mixture.

15. The preparation method according to claim 14, **characterized in that** the dry-mixing preparation of the mixture satisfies one or more of the following (1) to (3):
(1) that the dry-mixing preparation of the mixture is performed at a temperature of 5°C to 20°C;
(2) that the dry-mixing preparation of the mixture is performed at a rotation speed of 500 rpm to 4000 rpm, and optionally, the dry-mixing preparation of the mixture is performed at a rotation speed of 1000 rpm to 2500 rpm; and
(3) that the dry-mixing preparation of the mixture is performed for 20 min to 120 min, and optionally, the dry-mixing preparation of the mixture is performed for 30 min to 90 min.

16. The preparation method according to either claim 14 or 15, **characterized in that** the shear mixing satisfies one or more of the following (I) to (III):
(I) that the shear mixing is performed at a temperature of 25°C to 200°C, and optionally, the shear mixing is performed at a temperature of 45°C to 120°C;
(II) that the shear mixing is performed at a rotation speed of 10 rpm to 200 rpm, and optionally, the shear mixing is performed at a rotation speed of 15 rpm to 120 rpm; and
(III) that the shear mixing is performed for 5 min to 60 min, and optionally, the shear mixing is performed for 20 min to 45 min.

17. The preparation method according to any one of claims 13 to 16, **characterized in that** a solid content of the prepared positive electrode slurry is higher than or equal to 75%, optionally in a range of 75% to 85%.

18. The preparation method according to any one of claims 13 to 17, **characterized in that** the positive electrode slurry is prepared into a self-supporting positive electrode active material layer through extrusion molding.
